# EUROPEAN PATENT APPLICATION

(11) **EP 3 324 620 A2**
(43) Date of publication of application: **23.05.2018**
(21) Application number: 17196351.5
(22) Date of filing: 13.10.2017
(51) Int. Cl.: H04N 13/279

(54) **STEREOSCOPIC IMAGE DISPLAY PROGRAM, STEREOSCOPIC IMAGE DISPLAY METHOD, AND INFORMATION PROCESSING APPARATUS**

(30) Priority: 17.11.2016 JP 2016224466
(71) Applicant: FUJITSU LIMITED, Kanagawa 211-8588 (JP)
(72) Inventor: Tanaka, Shota, Kanagawa, 211-8588 (JP); Tenma, Tsukasa, Kanagawa, 211-8588 (JP); Akahoshi, Ryusuke, Kanagawa, 211-8588 (JP); Morimoto, Mari, Kanagawa, 211-8588 (JP)
(74) Representative: Hoffmann Eitle

(57) **Abstract**

A stereoscopic image display method of causing a computer to display a first image and a second image of an object simulated in a three-dimensional simulation space, the first image being given by projecting the object in a first projection region extending from a first position toward a first projection plane, the second image being given by projecting the object in a second projection region extending from a second position toward a second projection plane and being coincident, in a particular plane, with the first projection region, the process including: accepting a specification of one of points in the object; and displaying the first image by projecting, in the first projection region, the object placed at a position where the specified point is included in the particular plane, and the second image by projecting, in the second projection region, the object placed at the position.

## Description

### FIELD

The embodiments discussed herein are related to a stereoscopic image display program, a stereoscopic image display method, and an information processing apparatus.

### BACKGROUND

A conventional technique is known to reproduce a human body, an object, or the like in a three-dimensional simulation space using three-dimensional CAD (Computer Aided Design). A technique is also known to visualize, in a real space, a three-dimensional model of a human body, an object, or the like reproduced by the three-dimensional CAD (see, for example, International Publication Pamphlet No. WO 2013/069413).

In the technique to visualize a three-dimensional model, for example, an image obtained from a left eye and an image obtained from a right eye are displayed at the same time such that a stereoscopic image is obtained.

As a prior art, for example, regarding medical image processing apparatuses, a technique is known to generate a stereoscopic image such that the amount of a parallax is smaller than a threshold value for a region of interest corresponding to a focal position of a medical image capture apparatus having an optical system (see, for example, Japanese Laid-open Patent Publication No. 2014-236340).

As a prior art regarding, for example, medical image processing apparatuses, a technique is known to display a stereoscopic image in actual size (see, for example, Japanese Laid-open Patent Publication No. 2015-6327).

In the technique of visualizing a three-dimensional model, a model as observed from a particular position is displayed. As a result, a stereoscopic effect and a perceived size vary depending on the position from which the model is observed. Therefore, for example, when a display target of model is displayed stereoscopically in actual size, there may occur a situation in which it is difficult for an observer to perceive the size displayed in actual size unless the observer is located at the particular position. For example, in a case where there are a plurality of observers, it is difficult for the plurality of observers to occupy the particular position at the same time, and thus the sizes perceived by the observers are different.

In an aspect, the present disclosure provides a stereoscopic image display program, a stereoscopic image display method, and an information processing apparatus, capable of allowing the size of a plane including a point to be observed to be perceived as the same regardless of the position from which the point is observed.

### SUMMARY

According to an aspect of the invention, a stereoscopic image display method of causing a computer to display a first image and a second image of an object simulated in a three-dimensional simulation space, the first image being given by projecting the object in a first projection region extending from a first position toward a first projection plane, the second image being given by projecting the object in a second projection region extending from a second position toward a second projection plane and being coincident, in a particular plane, with the first projection region, the process including: accepting a specification of one of points in the object; and displaying the first image by projecting, in the first projection region, the object placed at a position where the specified point is included in the particular plane, and the second image by projecting, in the second projection region, the object placed at the position.

### BRIEF DESCRIPTION OF DRAWINGS

FIG. 1 is a diagram illustrating an example of an operation of an information processing apparatus;
FIG. 2 is a block diagram illustrating an example of a hardware configuration of an information processing apparatus;
FIG. 3 is a diagram illustrating an example (a first example) of 3D data;
FIG. 4 is a diagram illustrating an example (a second example) of 3D data;
FIG. 5 is a block diagram illustrating an example of a functional configuration of an information processing apparatus;
FIG. 6 is a diagram illustrating an example of setting a right eye position and a left eye position in a 3-dimensional space;
FIG. 7 is a diagram illustrating an example of setting projection regions;
FIGs. 8A, 8B, and 8C are diagrams illustrating an example of a manner of displaying two video images;
FIGs. 9A and 9B are diagrams illustrating a first example of scaling;
FIGs. 10A, 10B, and 10C are diagrams illustrating a second example of scaling;
FIGs. 11A to 11C are diagrams illustrating examples of manners of highlighting parts corresponding to planes where the parallax becomes zero;
FIGs. 12A and 12B are diagrams illustrating an example of a manner of moving a model;
FIGs. 13A and 13B are diagrams illustrating an example of a manner of rotating and/or moving a model;
FIG. 14 is a flow chart illustrating an example of a stereoscopic image display procedure performed by an information processing apparatus;
FIG. 15 is a flow chart illustrating a first specific example of a movement and/or rotation process illustrated in FIG. 14; and
FIG. 16 is a flow chart illustrating a second specific example of a movement and/or rotation process illustrated in FIG. 14.

### DESCRIPTION OF EMBODIMENTS

A stereoscopic image display program, a stereoscopic image display method, and an information processing apparatus according to embodiments are described in detail below with reference to accompanying drawings.

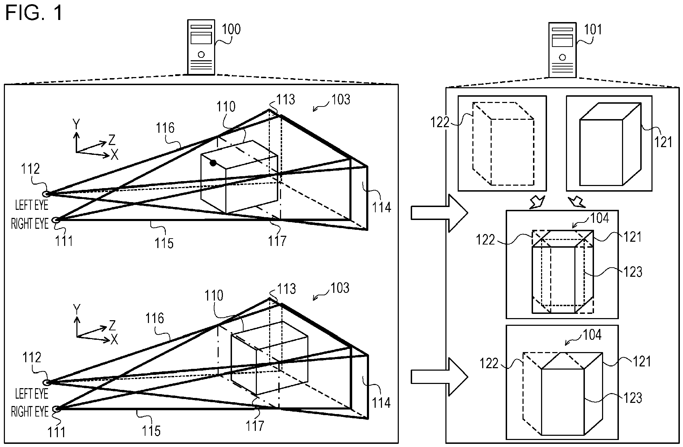

FIG. 1 is a diagram illustrating an example of an operation of an information processing apparatus. An information processing apparatus 100 is a computer that assists in displaying, in a particular space 104, a stereoscopic image of a model reproduced in a simulation space 103 by three-dimensional CAD. The particular space 104 is a real space in which a three-dimensional orthogonal coordinate system having an X-axis, a Y-axis, and a Z-axis is defined. The model is, for example, a human body, a product, a part of a product, a prototype of a product or a part thereof, an object such as a building, or the like, reproduced in the simulation space 103. The simulation space 103 is a virtual 3-dimensional space simulated on a computer. In the simulation space 103, for example, a three-dimensional orthogonal coordinate system having an X-axis, a Y-axis, and a Z-axis is defined.

A conventional technique is known to visualize, in a real space, a three-dimensional model of a human body, an object, or the like, reproduced in the simulation space 103. Visualization of a three-dimensional model in the real space is also referred to as stereoscopic visualization. A VR (Virtual Reality) system for providing stereoscopic visualization is used in a wide variety of fields including industrial fields. For example, in manufacturing, a VR system is used to display a stereoscopic image of a model of an object to be produced such that a developer is allowed to verify the object 110 in advance before the production of the object is started. For example, by displaying the model stereoscopically in actual size, it becomes possible for the developer, in verification, to more intuitively recognize the distance or the size of the model than is possible in a case where the model is displayed on a conventional display or the like.

However, in the VR system, for example, the model observed from a particular position is displayed stereoscopically. Furthermore, in the VR system, the stereoscopic effect of the model and the perceived size of the model are different depending on the position from which the stereoscopically displayed model is observed. For example, in a case where a model of interest is displayed stereoscopically in actual size, there may occur a situation in which it is difficult for an observer to perceive the actual size unless the observer is located at the particular position. In the VR system, in view of the above, for example, it is known to display a stereoscopic image of a model depending on a position of an observer identified based on head tracking or the like. However, for example, because the model is displayed stereoscopically depending on the position of the particular observer, when there are a plurality of observers, it is difficult for the plurality of observers to simultaneously perceive the size of the model or the distance to the model. More specifically, it is difficult for the plurality of observers to occupy the same particular position at the same time, and thus the perceived size is different depending on the observers.

In the present embodiment, in view of the above, the information processing apparatus 100 moves a model such that a point of interest to be observed comes to a position included in a plane in which the parallax between right and left eyes becomes zero, and displays images projected in projection regions respectively for the right eye and the left eye. In verification using the stereoscopic visualization, a plurality of observers observe the same point in a model displayed stereoscopically. In this situation, because the information processing apparatus 100 provides the stereoscopic visualization such that the parallax becomes zero for the point of interest to be observed, the size perceived by the observer is the same regardless of the position from which the observation point is seen. Therefore, the information processing apparatus 100 makes it possible to allow verification using the stereoscopic visualization to be performed in an efficient manner.

The information processing apparatus 100 performs control such that a display apparatus 101 displays a first image 121 and a second image 122 in a particular space 104. The first image 121 is an image obtained by projecting an object 110 of interest simulated in the simulation space 103 in a first projection region 115 extending from a first position 111 toward a first projection plane 113. The first image 121 is an image for being seen with a right eye by an observer. The first position 111 is a position of the right eye of the observer in the simulation space 103. The second image 122 is an image obtained by projecting the object 110, in the simulation space 103, in a second projection region 116 which extends from a second position 112 toward a second projection plane 114 and which is coincident, in a particular plane 117, with the first projection region 115. The second image 122 is an image for being seen with the left eye by the observer. The second position 112 is a position of the left eye of the observer in the simulation space 103.

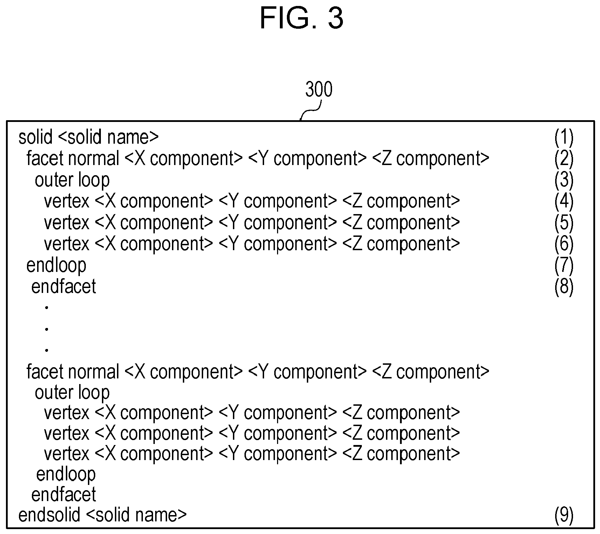

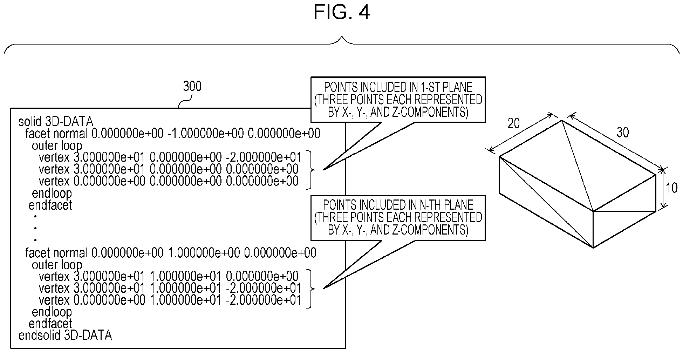

The object 110 herein is, for example, a model represented by 3D (3-dimensional) data generated by three-dimensional CAD. A detailed example of 3D data will be described later with reference to FIG. 3 or FIG. 4. The first projection region 115 and the second projection region 116 are regions set in the simulation space 103. An example of the display apparatus 101 is a VR projector. A specific example of a displaying process performed by the information processing apparatus 100 is described below. The information processing apparatus 100 first generates, using three-dimensional CAD, projection information representing the first projection region 115 and the second projection region 116. Next, the information processing apparatus 100 generates image information representing the first image 121 obtained by projecting the object 110 in the first projection region 115 and image information representing the second image 122 obtained by projecting the object 110 in the second projection region 116. Note that the image information generated in this process is information based on a display form of the display apparatus 101. For example, the generated image information may include RGB (Red Green Blue) values for respective pixels.

The information processing apparatus 100 then transmits, to the display apparatus 101, the image information representing the first image 121 and the image information representing the second image 122. In response, the display apparatus 101 displays the first image 121 and the second image 122 based on the received image information representing the first image 121 and the image information representing the second image 122. Note that a plane 123 corresponds to the particular plane 117 in the first image 121 and the second image 122.

The first position 111 is the position of the right eye set in the simulation space 103. The second position 112 is the position of the left eye set in the simulation space 103. The particular plane 117 is, for example, a plane where the first projection region 115 and the second projection region 116 are coincident with each other. Note that the particular plane 117 is a plane where the parallax between the right eye and the left eye in the simulation space 103 becomes zero.

The information processing apparatus 100 accepts a specification of one of points in the object 110. More specifically, for example, the information processing apparatus 100 accepts a specification of one of points via an input operation on a mouse, a keyboard, or the like of the information processing apparatus 100.

The information processing apparatus 100 controls the display apparatus 101 to display the first image 121 obtained by projecting, in the first projection region 115, the object 110 placed at a position where the specified point is included in the particular plane 117. Furthermore, the information processing apparatus 100 controls the display apparatus 101 to display the second image 122 obtained by projecting, in the second projection region 116, the object 110 placed at the position where the specified point is included in the particular plane 117.

A specific example of a displaying process is described below. For example, the information processing apparatus 100 moves the object 110 to a position where the specified point is included in the particular plane 117. Note that moving the object 110 in the simulation space 103 is realized by generating 3D data using three-dimensional CAD such that the 3D data represents the object 110 placed at the position where the specified point is included in the particular plane 117. Thereafter, for example, the information processing apparatus 100 generates image information representing the first image 121 obtained by projecting the moved object 110 in the first projection region 115 and image information representing the second image 122 obtained by projecting the positioned object 110 in the second projection region 116. Note that the information format of the image information is determined depending on the display apparatus 101. The information processing apparatus 100 transmits each piece of the image information to the display apparatus 101. In response, the display apparatus 101 displays the first image 121 and the second image 122.

For example, in verification using stereoscopic visualization, a plurality of observers observe the same point in the object 110 displayed stereoscopically. In this situation, because the information processing apparatus 100 provides the stereoscopic visualization such that the parallax becomes zero for the point of interest to be observed, the size perceived by the observer does not change regardless of the position from which the observation point is seen.

Example of hardware configuration of information processing apparatus 100

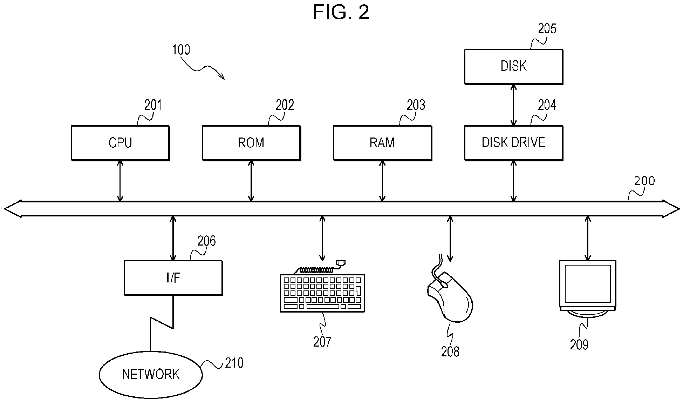

FIG. 2 is a block diagram illustrating an example of a hardware configuration of the information processing apparatus 100. The information processing apparatus 100 includes a CPU (Central Processing Unit) 201, a ROM (Read Only Memory) 202, and a RAM (Random Access Memory) 203. The information processing apparatus 100 further includes a disk drive 204, a disk 205, an I/F (Inter/Face) 206, a keyboard 207, a mouse 208, and a display 209. The CPU 201, the ROM 202, the RAM 203, the disk drive 204, the I/F 206, the keyboard 207, the mouse 208, and the display 209 are connected to each other via a bus 200.

The CPU 201 is responsible for controlling the whole information processing apparatus 100. The ROM 202 stores a program such as a boot program. The RAM 203 is used as a work area by the CPU 201. The disk drive 204 controls, under the control of the CPU 201, reading/writing of data from/to the disk 205. The disk 205 stores the data written under the control of the disk drive 204. Examples of disks 205 include a magnetic disk, an optical disk, etc.

The I/F 206 is connected, via a communication line, to a network 210 such as a LAN (Local Area Network), a WAN (Wide Area Network), the Internet, or the like and is connected to another apparatus via this network 210. The I/F 206 provides an interface between the network 210 and the internal part of the information processing apparatus 100, and controls inputting and outputting of data from or to an external apparatus. The I/F 206 may be realized using, for example, a modem, a LAN adapter, or the like.

The keyboard 207 and the mouse 208 are interfaces which are operated by a user to input various kinds of data. The display 209 is an interface that outputs data in accordance with an instruction issued by the CPU 201.

Although not illustrated in the figure, the information processing apparatus 100 may include an input apparatus for inputting an image or a moving image from a camera and/or an input apparatus for inputting a voice/sound from a microphone. Although also not illustrated in the figure, the information processing apparatus 100 may include an output apparatus such as a printer.

In the present embodiment, the hardware configuration of the information processing apparatus 100 is described for a case where the information processing apparatus 100 is by way of example a personal computer. However, the information processing apparatus 100 is not limited to the personal computer, but the information processing apparatus 100 may be another type of apparatus such as a server or the like. In a case where the information processing apparatus 100 is a server, the information processing apparatus 100 may be connected, via the network 210, to an apparatus operable by a user, the display 209, and/or the like.

### Contents stored in various DBs (Databases) or the like

Next, contents stored in various DBs or the like of the information processing apparatus 100 are described below. Each of the DBs or the like may be realized, for example, using a storage unit such as the ROM 202, the RAM 203, or the disk 205 of the information processing apparatus 100 illustrated in FIG. 2 or a non-transitory semiconductor memory (not illustrated).

FIG. 3 is a diagram illustrating an example (first example) of 3D data. In the example described below with referent to this figure, it is assumed by way of example that 3D data 300 is described in a STL (Standard Triangulated Language) file format. In line (1) in FIG. 3, a character string representing a name of a solid is described. In line (2) in FIG. 3, components of a surface normal vector of a triangle are described. In line (3) in FIG. 3, a start symbol of a point included in the triangle is described.

In lines (4) to (6) in FIG. 3, components of points included in the triangle are described. In line (7) in FIG. 3, an end symbol of a point included in the triangle is described. In line (8) in FIG. 3, an end symbol of a plane of the triangle is described. In line (9) in FIG. 3, a symbol indicating an end of the solid is described.

FIG. 4 is a diagram illustrating an example (second example) of 3D data. More specifically, the example illustrated in FIG. 4 is of a sample model of a rectangular hexahedron with lengths of 30, 10, and 20 respectively in X, Y, and Z directions. In the 3D data, points included in planes are described for each plane. More specifically, in the 3D data 300, as illustrated in FIG. 4, points included in respective planes are described separately starting with a first plane to an N-th plane.

Example of functional configuration of information processing apparatus 100

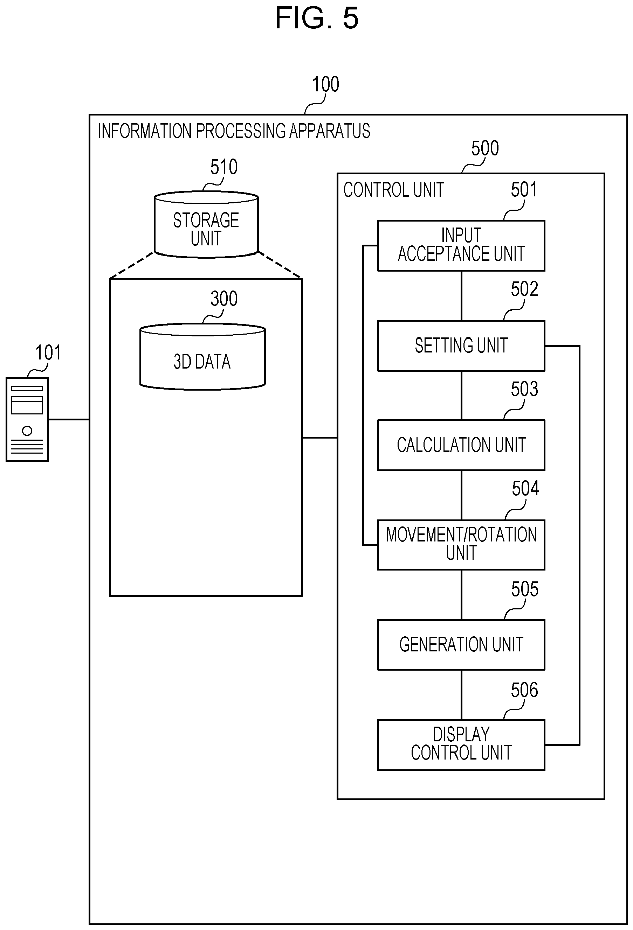

FIG. 5 is a block diagram illustrating an example of a functional configuration of the information processing apparatus 100. The information processing apparatus 100 includes an input acceptance unit 501, a setting unit 502, a calculation unit 503, a movement/rotation unit 504, a generation unit 505, a display control unit 506, and a storage unit 510. Processes on those units from the input acceptance unit 501 to the display control unit 506 performed by the control unit 500 are coded in programs stored in a storage apparatus such as the ROM 202, the RAM 203, the disk 205 or the like accessible by the CPU 201 illustrated in FIG. 2. The CPU 201 reads the programs from the storage apparatus and performs the processes coded in the programs. As a result, the processes by the control unit 500 are realized. A result of a process performed by the control unit 500 may be stored in a storage apparatus such as the RAM 203, the ROM 202, the disk 205, or the like.

The information processing apparatus 100 and the display apparatus 101 may be connected to each other via the network 210 or via a cable.

The input acceptance unit 501 accepts, for example, a specification of a viewpoint position. The viewpoint position refers to a midpoint between the right eye position and the left eye position. The position information representing the viewpoint position is three-dimensional vector information. The input acceptance unit 501 also accepts inputting of information representing the distance between the right eye position and the left eye position.

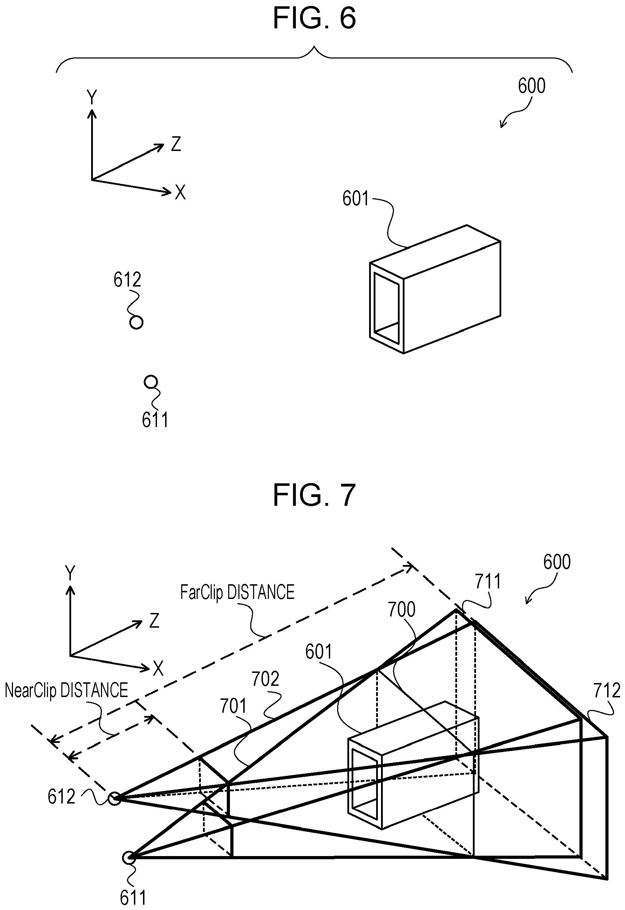

For example, the setting unit 502 sets, in the three-dimensional simulation space, the right eye position and the left eye position based on the specified viewpoint position and the distance between the right eye position and the left eye position. Details of the setting of the right eye position and the left eye position will be described later for a particular example in conjunction with FIG. 6.

Next, the input acceptance unit 501 accepts a specification of an observation point position. Alternatively, the observation point position may be determined via three-dimensional CAD. For example, the observation point position may be a center point of an object in the simulation space. The observation point position corresponds to a midpoint of a plane described later where the parallax becomes zero. The setting unit 502 then sets a direction of the line of sight given by a direction from the viewpoint position to the observation point position. Note that the direction of the line of sight defines a Z-axis direction in a three-dimensional orthogonal coordinate system associated with the right eye and the left eye.

The setting unit 502 sets the particular plane based on the vertical length of the projection region, the horizontal length of the projection region, and the observation point position. Note that the particular plane is a plane where the parallax between the right eye and the left eye becomes zero. The plane where the parallax becomes zero will also be referred to simply as a zero-plane. The vertical length of the projection region and the horizontal length of the projection region are determined based on the aspect ratio of a screen of a display of the display apparatus 101. The horizontal-to-vertical aspect ratio of the screen of the display of the display apparatus 101 may be, for example, 16 : 9, 4 : 3, etc.

Furthermore, the setting unit 502 sets the first projection region and the second projection region. The first projection region is a region extending from the right eye position toward the projection plane. The second projection region is a region extending from the left eye position toward the projection plane and being coincident, in a cross section corresponding to the zero-plane, with the first projection region.

More specifically, for example, the setting unit 502 sets the first projection region based on the right eye position, a NearClip distance described later, a FarClip distance described later, and the zero-plane. The first projection region is a region extending from the right eye position in the direction of the line of sight. More strictly, the first projection region is a region extending from the right eye position in the direction of the line of sight. Furthermore, the first projection region is a region extending from a position apart by the NearClip distance from the right eye position to a position apart by the FarClip distance from the right eye position.

Furthermore, the setting unit 502 sets the second projection region based on the left eye position, the NearClip distance, the FarClip distance, and the plane where the parallax becomes zero.

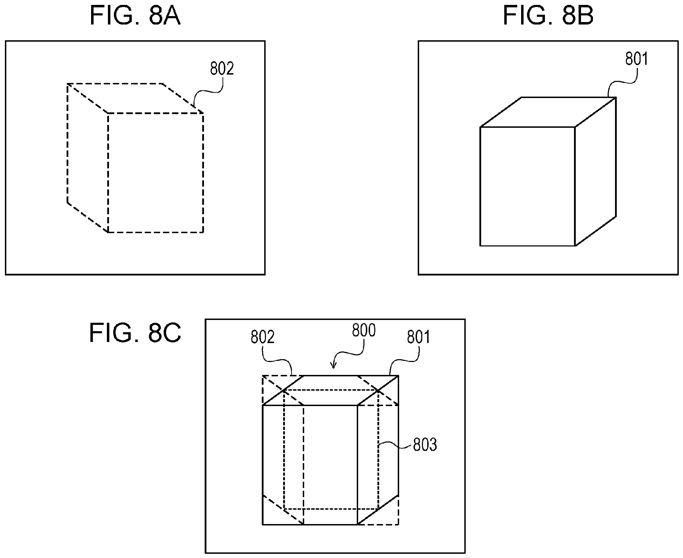

The setting unit 502 sets, in the simulation space, the first projection region from the right eye position to the projection plane and the second projection region from the left eye position to the projection plane. The display control unit 506 performs control such that the display apparatus 101 displays a first image obtained by projecting an object in the first projection region and a second image obtained by projecting the object in the second projection region. The display control unit 506 may perform control such that the display apparatus 101 displays the first image and the second image both generated by the information processing apparatus 100 or such that the display apparatus 101 generates and displays the first image and the second image. An example of a stereoscopic image seen by an observer when the first image and the second image are displayed will be described later with reference to FIG. 7, and an example of displaying the first image and the second image will be described later with reference to FIGs. 8A to 8C.

The calculation unit 503 calculates the length of each intersection line between the zero-plane and a greatest outer surface of the object in the simulation space. Furthermore, the calculation unit 503 calculates the size of the object to be displayed in the particular space based on the ratio of the calculated length to the size of the display of the display apparatus 101. The zero-plane is set based on the vertical-to-horizontal aspect ratio of the display of the display apparatus 101.

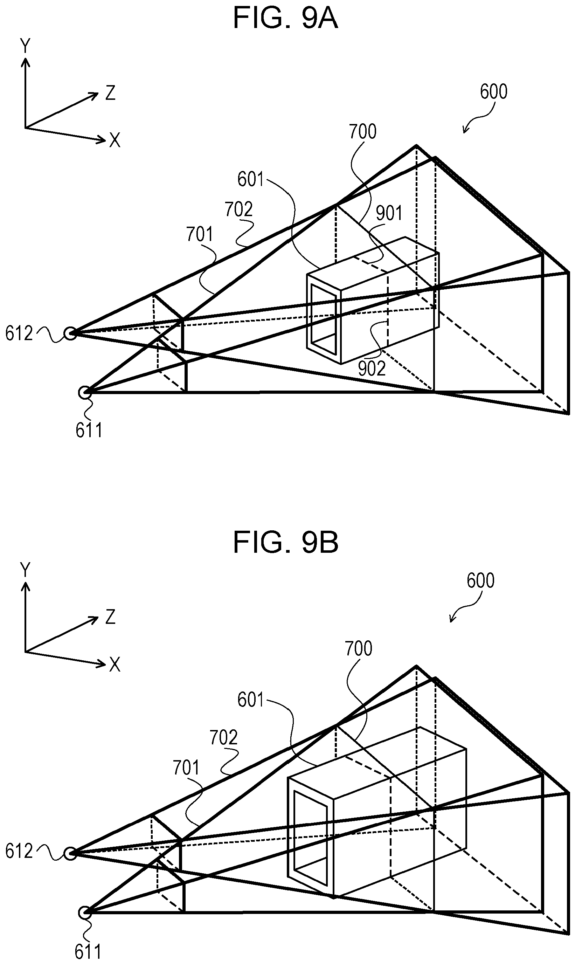

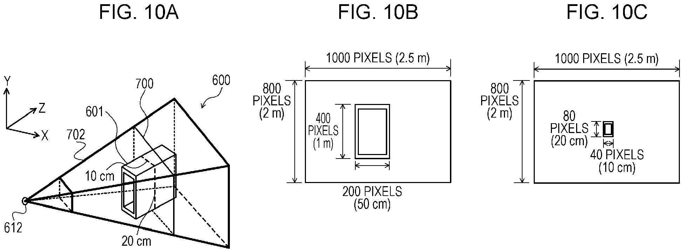

The display control unit 506 performs scaling on the object represented by the first image and the object represented by the second image based on the length of the intersection line between the zero-plane and the greatest outer surface of the object and the size of the display of the display apparatus 101. An example of scaling based on the intersection line between the zero-plane and the object will be described later with referent to FIGs. 9A and 9B and FIGs. 10A to 10C.

Furthermore, the display control unit 506 highlights a part of the object in contact with the zero-plane in the first image and the second image. Note that the part of the object in contact with the zero-plane is, for example, the intersection line between the zero-plane and the greatest outer surface of the object or a part close to the intersection line. More specifically, for example, the generation unit 505 adds information indicating the intersection line between the zero-plane and the greatest outer surface of the object to the 3D data 300. The generation unit 505 then generates, for example, image information representing the first image obtained by projecting, in the first projection region, the object added with intersection line represented by the 3D data 300 and image information representing the second image obtained by projecting the object added with the intersection line in the second projection region. The display control unit 506 then transmits each piece of generated image information to the display apparatus. The display apparatus 101 displays the first image and the second image respectively represented by corresponding pieces of image information.

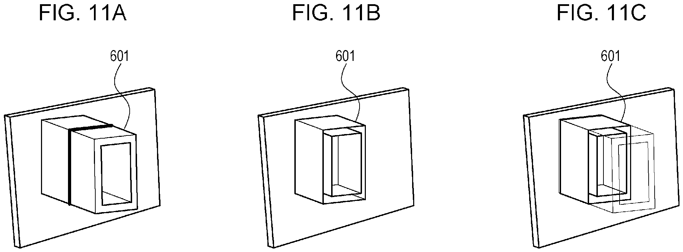

Thus, when a plurality of observers verifies the object displayed stereoscopically, the highlighting the zero-plane makes it possible for the plurality of observers to easily recognize the position to be observed, and thus, the information processing apparatus 100 is capable of providing easiness in verification. Specific examples of highlighting will be described later with reference to FIGs. 11A, 11B, and 11C.

The input acceptance unit 501 accepts a specification of one of points included in the object. More specifically, for example, the input acceptance unit 501 accepts a specification of one of points of the object simulated in the simulation space according to an input operation performed on the keyboard 207, the mouse 208, or the touch-panel display 209. Alternatively, for example, the input acceptance unit 501 may accept a specification of one of points of the object of the stereoscopic image displayed in the real space according to an input operation performed with a pointing device or the like capable of communicating with the information processing apparatus 100. One of points is, for example, a point of interest to be observed by an observer.

The display control unit 506 performs control such that the display apparatus 101 displays the first image obtained by projecting, in the first projection region, the object placed at a position where the specified point is included in the zero-plane and the second image obtained by projecting the object placed in the above-described manner in the second projection region. This displaying process is performed, for example, by the movement/rotation unit 504, the generation unit 505, and the display control unit 506.

First, the movement/rotation unit 504 moves the object, in the simulation space, to the position where the specified point is included in the zero-plane. Note that the moving the object 110 in the simulation space is realized by generating, using three-dimensional CAD, 3D data representing the object placed at the position where the specified point is included in the zero-plane. Thereafter, for example, the generation unit 505 generates the first image obtained by projecting of the moved object to the first projection region. Furthermore, for example, the generation unit 505 generates the second image obtained by projecting of the moved object in the second projection region. Note that the generating the images is realized by generating image information representing the video images. The image information is, for example, RGB information for each pixel. The process by the generation unit 505 may be performed not by the CPU 201 but by another different device such as a graphic card or the like.

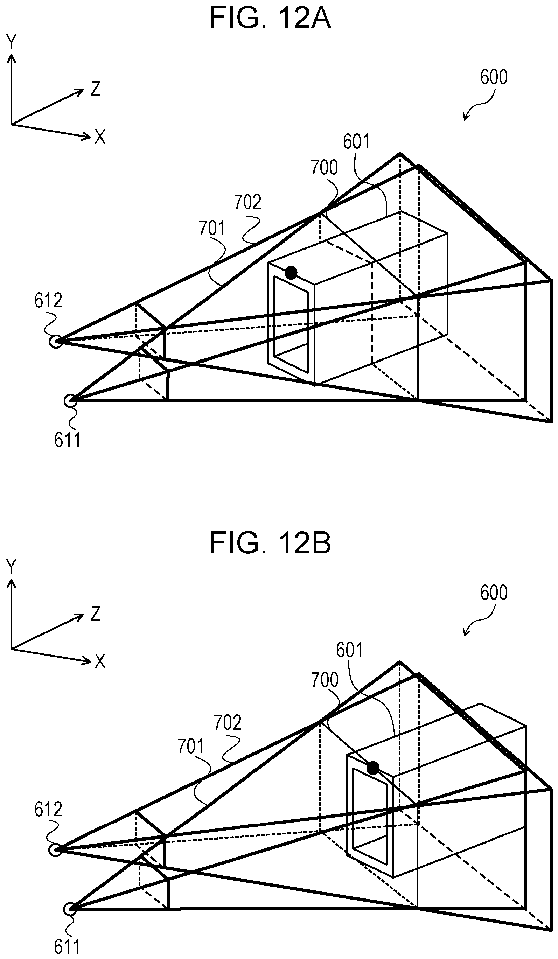

Thereafter, for example, the display control unit 506 performs control such that the display apparatus 101 displays the first image and the second image generated by the generation unit 505. More specifically, the display control unit 506 transfers the first image and the second image generated by the generation unit 505 to the display apparatus 101. The transferring of the first image and the second image to the display apparatus 101 is realized, for example, by writing the image information representing the first image and the image information representing the second image to a display RAM of the display apparatus 101. In response, the display apparatus 101 displays the images according to the image information written in the display RAM. An example of moving the object to the position where one of points is included in the zero-plane will be described later with reference to FIGs. 12A and 12B.

The input acceptance unit 501 also accepts a specification of one of planes (not points but planes) of the object. More specifically, for example, the input acceptance unit 501 accepts a specification of three of points of the object simulated in the simulation space according to an input operation performed on the keyboard 207, the mouse 208, or the touch-panel display 209. The display control unit 506 is capable of identifying the plane based on the specified three points. Note that the plane identified here is the specified plane.

The display control unit 506 performs control, for example, such that the object is rotated such that the specified plane is parallel to the zero-plane and the object is further moved to a position where a selected one of points in the specified plane is included in the zero-plane, and the first image obtained by projecting the object positioned in the above-described manner to the first projection region is displayed. Furthermore, for example, the display control unit 506 performs control to display the second image obtained by projecting, to the second projection region, the object placed at the position where the specified plane is parallel to the zero-plane and the one of points in the specified plane is included in the zero-plane. This displaying process is performed, for example, by the movement/rotation unit 504, the generation unit 505, and the display control unit 506.

More specifically, the movement/rotation unit 504 moves and/or rotates the object such that the specified plane is parallel to the zero-plane and one of points in the specified plane is in contact with the zero-plane. Note that the moving and/or rotating of the object in the simulation space is realized by generating 3D data, using three-dimensional CAD, so as to represent the object placed at the position where the specified plane is parallel to the zero-plane and the one of points in the specified plane is at a position in contact with the zero-plane. Thereafter, for example, the generation unit 505 generates the first image obtained by projecting the moved and/or rotated object to the first projection region. Furthermore, for example, the generation unit 505 generates the second image obtained by projecting the moved and/or rotated object to the second projection region. The display control unit 506 performs control, for example, such that the display apparatus 101 displays the first image and the second image.

FIG. 6 is a diagram illustrating an example of setting the right eye position and the left eye position in the 3-dimensional space. In the example illustrated in FIG. 6, an object 601 is simulated in a simulation space 600 by three-dimensional CAD. The information processing apparatus 100 executes the process of the three-dimensional CAD. The information processing apparatus 100 may simulate the object 601 in the simulation space 600 by reading 3D data 300 by the three-dimensional CAD. In the simulation space 600, an orthogonal coordinate system is defined by an X-axis, a Y-axis, and a Z-axis.

The input acceptance unit 501 accepts, for example, a specification of a viewpoint position that is a midpoint between a right eye position 611 and a left eye position 612 in the simulation space 600. The input acceptance unit 501 may accept position information on 3D glasses or the like as the position information indicating the viewpoint position. Furthermore, the input acceptance unit 501 accepts a specification of the distance between the right eye position 611 and the left eye position 612.

The setting unit 502 sets the right eye position 611 and the left eye position 612 in the simulation space 600 based on the accepted viewpoint position and the distance between the right eye position 611 and the left eye position 612. Note that it is assumed that the two eyes are located on the X-axis.

FIG. 7 is a diagram illustrating an example of setting projection regions. In the example illustrated in FIG. 7, a first projection region 701 and a second projection region 702 are set by the setting unit 502.

More specifically, for example, the setting unit 502 sets the first projection plane 711 according to the FarClip distance from the right eye position 611. Furthermore, for example, the setting unit 502 sets the second projection plane 712 according to the FarClip distance from the left eye position 612.

The setting unit 502 sets the first projection region 701 which extends from the right eye position 611 toward the first projection plane 711 and which includes a zero-plane 700 between the first projection plane 711 and a plane defined by the NearClip distance from the right eye position 611. Furthermore, the setting unit 502 sets the second projection region 702 which extends from the left eye position 612 toward the second projection plane 712 and which includes the zero-plane 700 between the second projection plane 712 and the plane defined by the NearClip distance from the right eye position 611.

The generation unit 505 generates image information representing the image for the right eye obtained by projecting the object 601 in the first projection region 701 and image information representing the image for the left eye obtained by projecting the object 601 to the second projection region 702. The display control unit 506 transmits the image information representing the image for the right eye and the image information representing the image for the left eye to the display apparatus 101. The display apparatus 101 displays the images for the respective eyes based on the received image information. Thus, the display control unit 506 is capable of controlling the display apparatus 101 to display the image for the right eye and the video image for the left eye.

FIGs. 8A, 8B, and 8C are diagrams illustrating an example of displaying two images. For example, the display apparatus 101 displays the first image 801 for the right eye and the second image 802 for the left eye in a real space 800 by using the display of the display apparatus 101. In the example illustrated in FIGs. 8A to 8C, for easy understanding, the object 601 is illustrated in a simplified manner. An observer is able to recognize a stereoscopic image from the two images, that is, the first image 801 for the right eye and the second image 802 for the left eye. A plane 803 that is a plane equally shared by both the first image 801 for the right eye and the second image 802 for the left eye is included, for example, in the zero-plane 700. Therefore, when an observer looks at the first image 801 for the right eye and the second image 802 for the left eye, the observer perceives the stereoscopic image of the object 601.

FIGs. 9A and 9B are diagrams illustrating a first example of scaling. For example, the calculation unit 503 calculates the length (901, 902) of each intersection line between the zero-plane 700 and the outer surface of the object 601. The calculation unit 503 determines a scaling factor such that the object 601 is displayed in actual size on the screen of the display apparatus 101, for example, based on the respective calculated lengths, the size of the display of the display apparatus 101, and the size of the object 601 displayed by the display of the display apparatus 101. Note that the size of the display of the display apparatus 101 is determined in advance. Note that the generation unit 505 is capable of identifying the size of the object 601 displayed by the display of the display apparatus 101.

The generation unit 505 performs scaling on the 3D data 300 of the object 601 according to the scaling factor. The generation unit 505 then generates the first image 801 obtained by projecting the scaled object 601 in the first projection region 701 and the second image 802 obtained by projecting the scaled object 601 in the second projection region 702. The display control unit 506 controls the display apparatus 101 to display the first image 801 and the second image 802 generated by the generation unit 505.

Alternatively, the display control unit 506 may give the scaling factor to the display apparatus 101 and may control the display apparatus 101 to perform scaling according to the scaling factor and display the resultant first image 801 and the second image 802. A more detailed example of scaling is described below with reference to FIGs. 10A to 10C.

FIGs. 10A to 10C are diagrams illustrating a second example of scaling. As illustrated in FIG. 10A, the calculation unit 503 calculates the length of each intersection line between the zero-plane 700 and the outer surface of the object 601. In the example illustrated in FIG. 10A, the vertical length of the outer shape is 20 cm, and the horizontal length is 10 cm. Next, as illustrated in FIG. 10B, the scaling unit identifies the length of each outer part, which is in contact with the zero-plane 700, of the object 601 represented by the stereoscopic image and identifies the size of the display of the display apparatus 101.

Note that the size of the display and the length of each outer part, which is in contact with the zero-plane 700, of the object 601 represented by the stereoscopic image are represented in units of pixels. The length of one pixel is determined depending on the display. As illustrated in FIG. 10B, for example, the size of the part of the object 601 in contact with the zero-plane 700 in the displayed stereoscopic image is 400 pixels in the vertical direction and the 200 pixels in the horizontal direction. The size of the display of the display apparatus 101 is, for example, 800 pixels in the vertical direction and the 1000 pixels in the horizontal direction. In the present example, the length of one pixel is 0.25 cm. That is, 400 pixels are 1 m, and 800 pixels are 2 m. The length of the intersection line is 20 cm. Thus, the scaling factor is 1/5.

For example, the display control unit 506 controls the display apparatus 101 to display the first image 801 and the second image 802 scaled according to the scaling factor. In the example illustrated in FIG. 10C, the size of a part, in contact with the zero-plane 700, of the object 601 is by way of example 80 pixels in the vertical direction and 40 pixels in the horizontal direction.

The display control unit 506 controls the display apparatus 101 to display the first image 801 obtained by projecting the scaled object 601 in the first projection region 701 and the second image 802 obtained by projecting the scaled object 601 in the second projection region 702.

FIGs. 11A to 11C are diagrams illustrating examples of manners of highlighting a part corresponding to the plane where the parallax becomes zero. For example, the display control unit 506 performs control such that an intersection line between the zero-plane 700 and the greatest outer surface of the object 601 is displayed in a highlighted manner. In the example illustrated in FIG. 11A, the display control unit 506 performs control such that the intersection line is displayed in a thick line thereby achieving highlighting. In the example illustrated in FIG. 11B, the display control unit 506 performs control to display a cross section of the object 601 taken at the intersection line that provides the base of the scaling thereby achieving highlighting. In the example illustrated in FIG. 11C, the display control unit 506 performs control to display the object 601 such that the object 601 is blurred other than a part close to the intersection line thereby achieving highlighting.

For example, the display control unit 506 transmits, to the display apparatus 101, image information representing the image obtained by projecting the object with the highlighted intersection line in the simulation space. In response, the display apparatus 101 displays the image based on the image information. Thus, the intersection line is displayed in the highlighted manner. Alternatively, the display control unit 506 may transmit, to the display apparatus 101, image information representing the image of the projected object together with information indicating the part to be highlighted. When the display apparatus 101 display the image information, the display apparatus 101 may highlight the intersection line in the image based on the information indicating the part to be highlighted.

FIGs. 12A and 12B are diagrams illustrating an example of a manner of moving a model. The input acceptance unit 501 accepts a specification of one of points of the object 601 in the simulation space 600. In the example illustrated in FIGs. 12A and 12B, one of points is denoted by a solid dot. The movement/rotation unit 504 moves the object 601 such that the one of points comes to a position in the zero-plane 700. The display control unit 506 performs control such that the display apparatus 101 displays an image obtained by projecting the moved object 601 in the first projection region 701 and an image obtained by projecting the moved object 601 in the second projection region 702.

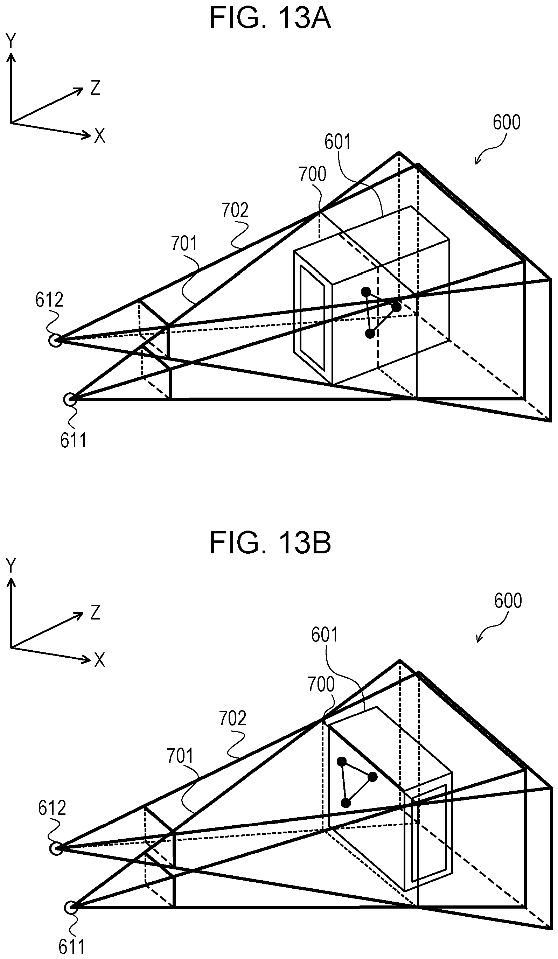

FIGs. 13A and 13B are diagrams illustrating an example of a manner of rotating and/or moving a model. For example, the input acceptance unit 501 accepts a specification of three of points of the object 601. The movement/rotation unit 504 identifies the plane defined by the specified three points. The movement/rotation unit 504 rotates and/or moves the object 601 in the simulation space 600 such that the identified plane is parallel to the zero-plane 700 and the identified plane is in contact with one of points of the zero-plane 700. The display control unit 506 performs control such that the display apparatus 101 displays an image obtained by projecting the rotated and/or moved object 601 in the first projection region 701 an image obtained by projecting the rotated and/or moved object 601 in the second projection region 702. Thus, the information processing apparatus 100 is capable of providing the stereoscopic image of the object 601 displayed in various directions such that the perceived size of the plane observed does not vary depending on the position from which the plane is seen.

### Procedure of displaying stereoscopic image performed by information processing apparatus 100

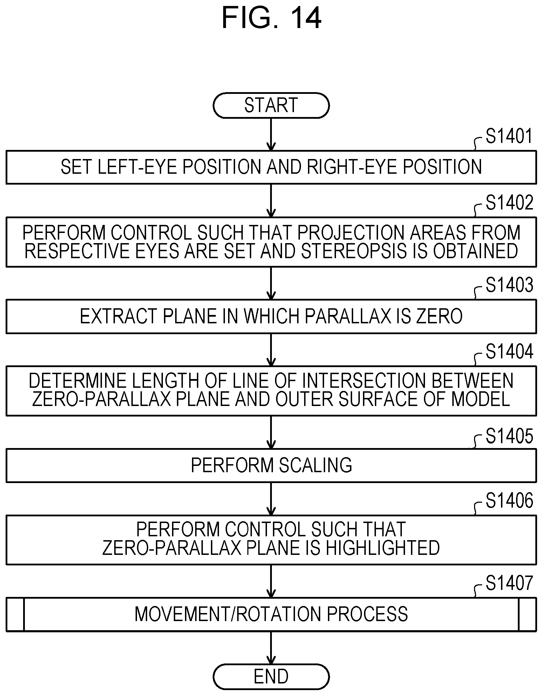

FIG. 14 is a flow chart illustrating an example of a procedure of displaying a stereoscopic image performed by the information processing apparatus 100. The information processing apparatus 100 sets the right eye position 611 and the left eye position 612 (step S1401). The information processing apparatus 100 sets projection regions extending from two respective eyes to control the stereoscopic visualization (step S1402). The information processing apparatus 100 extracts a plane where the parallax becomes zero (step S1403).

The information processing apparatus 100 identifies the length of the intersection line between the plane where the parallax is zero and the outer surface of the model (step S1404). The information processing apparatus 100 performs scaling to control the stereoscopic visualization (step S1405). The information processing apparatus 100 performs control such that the plane where the zero parallax is obtained is displayed in a highlighted manner (step S1406). In step S1406, the information processing apparatus 100 may perform control such that highlighting is performed as illustrated in FIG. 11A, FIG. 11B, or FIG. 11C. The information processing apparatus 100 performs a movement/rotation process (step S1407), and ends the sequence of processes. Note that the movement/rotation process may be performed a plurality of times in response to an input operation performed by an observer.

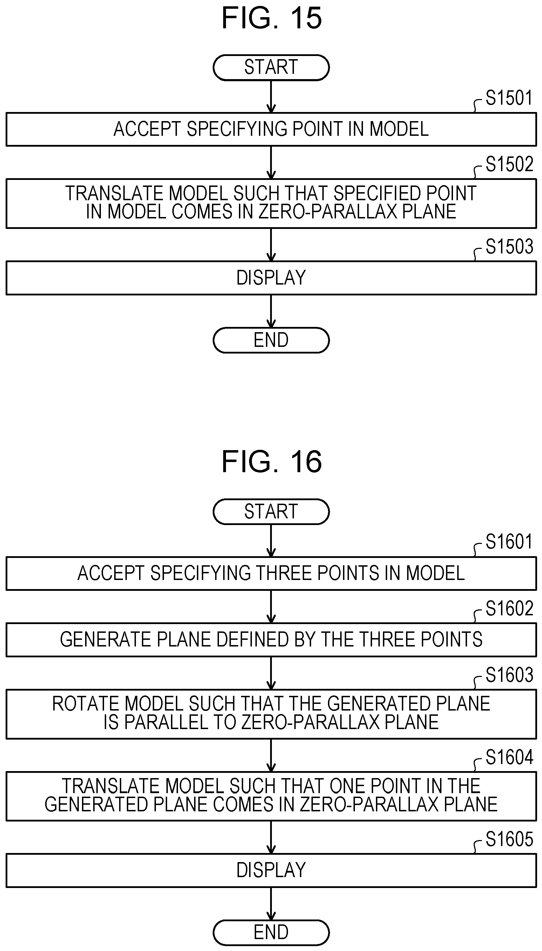

FIG. 15 is a flow chart illustrating a first example of a detailed movement/rotation process (step S1407) illustrated in FIG. 14. The information processing apparatus 100 accepts a specification of a point in a model (step S1501). The information processing apparatus 100 translates the model such that the specified point in the model is included in the plane where zero parallax is obtained (step S1502). Next, the information processing apparatus 100 performs control to display the first image 801 obtained by projecting the translated model in the first projection region 701 and the second image 802 obtained by projecting the translated model in the second projection region 702 (step S1503), and the information processing apparatus 100 ends the sequence of processes.

FIG. 16 is a flow chart illustrating a second example of the detailed movement/rotation process (step S1407) illustrated in FIG. 14. The information processing apparatus 100 accepts a specification of three points in a model (step S1601). The information processing apparatus 100 generates a plane defined by the three points (step S1602).

The information processing apparatus 100 performs a rotation such that the generated plane is parallel to the zero-parallax plane (step S1603). The information processing apparatus 100 performs a translation such that one point in the generated plane lies in the zero-parallax plane (step S1604). The information processing apparatus 100 performs control to display the first image 801 obtained by projecting the translated model in the first projection region 701 and the second image 802 obtained by projecting the translated model in the second projection region 702 (step S1605), and ends the sequence of processes.

As descried above, the information processing apparatus 100 displays images obtained by projecting the model, at the position where the observation of the model to be displayed is included in the plane where the parallax between the right eye and the left eye becomes zero, in projection regions corresponding to the respective two eyes. Thus, the information processing apparatus 100 is capable of providing the stereoscopic image such that the size perceived by the observer does not change regardless of the position from which the observation point is seen. Thus, the information processing apparatus 100 is capable of making it possible for a plurality of observers to easily verify the model displayed stereoscopically.

The information processing apparatus 100 also moves the model such that the observation point of the model is included in the plane where the parallax between the right eye and the left eye becomes zero, and projects the resultant model. Thus, the information processing apparatus 100 is capable of providing the stereoscopic image such that the size perceived by the observer does not change regardless of the position from which the observation point is seen.

The information processing apparatus 100 also performs control such that the model is placed at the position where the specified plane is parallel to the plane where the parallax becomes zero and a part of the specified plane lies anywhere in the plane where the zero parallax is obtained, and the display apparatus displays images respectively projected in corresponding projection regions. Thus, the information processing apparatus 100 is capable of providing the stereoscopic image such that the size perceived by the observer does not change regardless of the position from which the observation plane is seen.

Furthermore, the information processing apparatus 100 performs control to display the model such that a region lying in the plane where the parallax becomes zero is highlighted. Thus, when a plurality of observers performs verification on the object 601 displayed stereoscopically, displaying the zero-plane 700 in the highlighted manner makes it possible for the plurality of observers to easily recognize the part to be observed, and thus, the information processing apparatus 100 is capable of providing easiness in verification.

Note that the stereoscopic image display method according to any one of the embodiments may be realized by executing a stereoscopic image display program prepared in advance by a computer such as a personal computer, a workstation, or the like. The stereoscopic image display program may be stored in a computer-readable storage medium such as a magnetic disk, an optical disk, a USB (Universal Serial Bus) flash memory, or the like. The stereoscopic image display program may be read out by the computer from the storage medium and executed. Alternatively, the stereoscopic image display program may be supplied via a network such as the Internet.

## Claims

1. A computer-readable medium storing a stereoscopic image display program causing a computer to execute a process, the computer being configured to display, with a display apparatus, a first image and a second image of an object simulated in a three-dimensional simulation space, the first image being given by projecting the object in a first projection region extending from a first position toward a first projection plane, the second image being given by projecting the object in a second projection region extending from a second position toward a second projection plane and being coincident, in a particular plane, with the first projection region, the process comprising:
accepting a specification of one of points in the object; and
displaying the first image by projecting, in the first projection region, the object placed at a position where the specified point is included in the particular plane, and the second image by projecting, in the second projection region, the object placed at the position.

2. The medium according to claim 1, wherein the process further comprising;
moving the object so that the specified point is included in the particular plane, and
wherein in the displaying, the first image and the second image of the object, moved so as to be placed at the position where the specified point is included in the particular plane, are displayed.

3. The medium according to claim 1, wherein
in the accepting, accepting a specification of one of planes of the object in the simulation space, and
in the displaying, displaying the first image by projecting, in the first projection region, the object placed at a position where the specified plane is parallel to the particular plane and at least a part of the specified plane is located at a position somewhere in the particular plane, and the second image by projecting the object, placed at the position, in the second projection region.

4. The medium according to claim 3, wherein the process further comprising;
moving the object so that the specified plane is parallel to the particular plane and at least a part of the specified plane is located at a position somewhere in the particular plane, and
wherein in the displaying, the first image and the second image of the object, moved and/or rotated so as to be placed at the position, are displayed.

5. The medium according to claim 1, wherein the process further comprising displaying the particular plane in a highlighted manner.

6. The medium according to claim 1, wherein the first position indicates a position of a right eye of a person in the simulation space and the second position indicates a position of a left eye of the person in the simulation space.

7. The medium according to claim 6, wherein the particular plane is a plane where the parallax between the right eye of the person and the left eye of the person becomes zero in the simulation space.

8. A stereoscopic image display method of causing a computer to execute a process, the computer being configured to display, with a display apparatus, a first image and a second image of an object simulated in a three-dimensional simulation space, the first image being given by projecting the object in a first projection region extending from a first position toward a first projection plane, the second image being given by projecting the object in a second projection region extending from a second position toward a second projection plane and being coincident, in a particular plane, with the first projection region, the process comprising:
accepting a specification of one of points in the object; and
displaying the first image by projecting, in the first projection region, the object placed at a position where the specified point is included in the particular plane, and the second image by projecting, in the second projection region, the object placed at the position.

9. An information processing apparatus configured to display, with a display apparatus, a first image and a second image of an object simulated in a three-dimensional simulation space, the first image being given by projecting the object in a first projection region extending from a first position toward a first projection plane, the second image being given by projecting the object in a second projection region extending from a second position toward a second projection plane and being coincident, in a particular plane, with the first projection region, the information processing apparatus including a control unit configured to perform control comprising:
accepting a specification of one of points in the object; and
causing the display apparatus to display the first image by projecting, in the first projection region, the object placed at a position where the specified point is included in the particular plane, and the second image by projecting, in the second projection region, the object placed at the position.
